# FASCICULE DE BREVET EUROPEEN

(11) **EP 3 768 652 B1**
(45) Date de publication et mention de la délivrance du brevet: **25.11.2026**
(21) Numéro de dépôt: 19711909.2
(22) Date de dépôt: 20.03.2019
(51) Int. Cl.: C04B 35/01, B01F 27/50, B29C 64/336, B33Y 30/00, B33Y 10/00, B29C 64/209, B29C 64/106, C04B 35/622, C04B 35/18, C04B 35/14, B28B 1/00, B28C 5/12, B28C 5/16

(54) **PROCÉDÉ DE FABRICATION ADDITIVE DE CÉRAMIQUE PAR VOIE LIQUIDE**
VERFAHREN ZUR KERAMISCHEN GENERATIVEN FERTIGUNG MITTELS FLÜSSIGER MITTEL
ADDITIVE MANUFACTURING PROCESS OF CERAMICS VIA LIQUID ROUTE

(30) Priorité: 21.03.2018 FR 1852396
(43) Date de publication de la demande: 27.01.2021
(73) Titulaire: 3 D Minerals, 87100 Limoges (FR)
(72) Inventeur: JACQUEMENT, Cédric, 87000 Limoges (FR)
(74) Mandataire: Fantin, Laurent
(86) Numéro de dépôt international: PCT/EP2019/056983
(87) Numéro de publication internationale: WO 2019/180093

(56) Documents cités:
- EP-A1- 3 385 057
- WO-A1-2016/164729
- WO-A1-2017/156415
- WO-A1-2018/229419
- US-A- 6 030 199
- US-A1- 2003 065 400
- US-A1- 2016 168 453
- US-B1- 6 454 972
- WAN D. TENG ET AL: "Development of Ceramic Inks for Direct Continuous Jet Printing", JOURNAL OF THE AMERICAN CERAMIC SOCIETY., vol. 81, no. 4, 1 April 1998 (1998-04-01), US, pages 1033 - 1036, XP055524446, ISSN: 0002-7820, DOI: 10.1111/j.1151-2916.1998.tb02443.x
- EBERT J ET AL: "Direct inkjet printing of dental prostheses made of zirconia", vol. 88, no. 7, 1 July 2009 (2009-07-01), pages 673 - 676, XP002745570, ISSN: 0022-0345, Retrieved from the Internet <URL:http://jdr.sagepub.com/content/88/7/673> [retrieved on 20151005], DOI: 10.1177/0022034509339988
- WAN D. TENG ET AL: "Optimization of Dispersion and Viscosity of a Ceramic Jet Printing Ink", JOURNAL OF THE AMERICAN CERAMIC SOCIETY., vol. 80, no. 2, 1 February 1997 (1997-02-01), US, pages 486 - 494, XP055590336, ISSN: 0002-7820, DOI: 10.1111/j.1151-2916.1997.tb02855.x

## Description

La présente demande se rapporte à un procédé de fabrication additive de céramique par voie liquide.

Selon une première technique de fabrication additive, une pièce en matériau céramique est obtenue, à partir d'une poudre céramique ou d'un mélange de poudres céramiques, par un empilement de couches successives et, pour chaque couche, par un frittage sélectif à l'aide d'un laser par exemple. A titre d'exemple, comme indiqué dans le document FR2.774.931, cette première technique consiste à :
- déterminer une succession de sections superposées à partir d'une représentation numérique de la pièce à réaliser,
- répéter, pour chacune des sections, une étape de dépose de la poudre céramique ou du mélange de poudres céramiques sous la forme d'une fine couche et une étape de frittage laser de la zone ou des zones de la couche juste déposée correspondant à la section de la pièce.

Cette première technique est relativement onéreuse et s'avère longue et difficilement applicable pour les pièces de grandes dimensions.

Selon une deuxième technique, il est possible de marquer des supports à l'aide d'une encre minérale grâce à une technique d'impression jet d'encre, comme indiqué dans la publication « Development of Ceramic Inks for Direct Continuous Jet Printing » Publiée dans « journal of the american ceramic society, Vol. 81, n°4, 1 April 1998. Selon cette publication, l'encre céramique contient de la poudre céramique en suspension dans un liquide, notamment un solvant organique. La composition de cette encre céramique est déterminée pour qu'entre autres l'encre soit suffisamment liquide au moment du dépôt pour pouvoir se détacher sous la forme d'une gouttelette. Pour cela, l'encre céramique ne comprend pas de particules colloïdales. Cette deuxième technique est réservée aux pièces de petites dimensions.

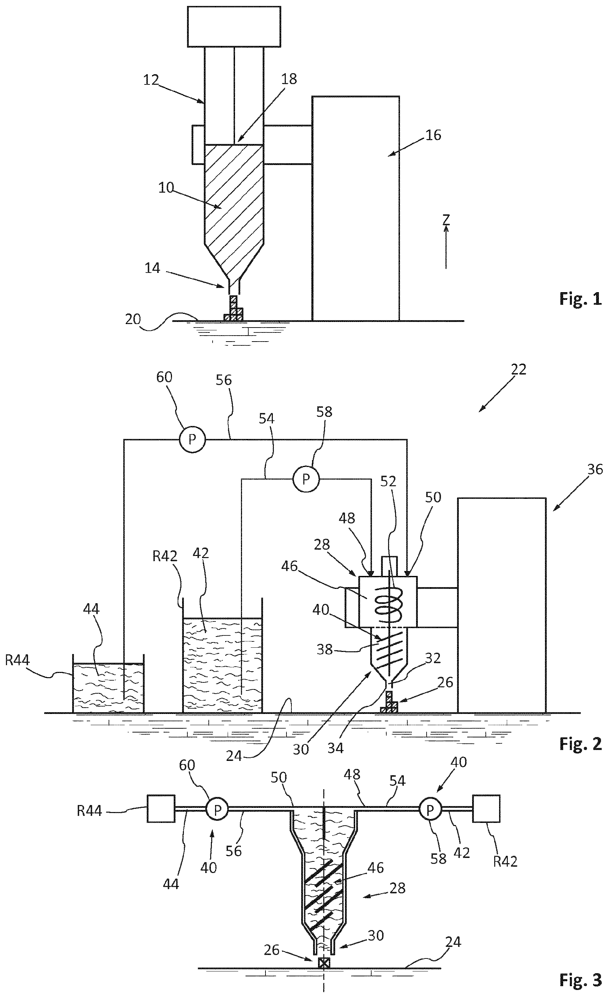

Selon une troisième technique de fabrication additive dite par extrusion pilotée, illustrée par la figure 1, une pièce céramique est obtenue à partir d'une matière pâteuse 10 qui est déposée de manière à obtenir la pièce souhaitée. En suivant, la pièce crue ainsi mise en forme est séchée puis cuite.

Pour la déposer, la matière pâteuse 10 est conditionnée dans un réservoir 12 fermé (avec un volume limité) qui présente en partie inférieure une buse 14 et qui est supporté par un système de déplacement 16 permettant de déplacer le réservoir 12, et plus particulièrement la buse 14, selon une direction verticale Z et dans un plan horizontal, par rapport à une surface de dépose 20.

Le réservoir 12 comprend un système de poussée 18, comme par exemple un piston, configuré pour pousser la matière pâteuse 10 en direction de la buse 14.

Le réservoir 12 ne peut pas être trop éloigné de la buse 14 en raison des pertes de charge qui deviennent rapidement très élevées dans le cas d'une matière pâteuse. Par conséquent, le réservoir 12 et la buse 14 sont contigus.

Selon un premier mode de fonctionnement, la matière pâteuse 10 sort de manière continue via la buse 14. Cette sortie continue combinée au déplacement de la buse 14 permet de générer un boudin de matière pâteuse 10.

Selon un deuxième mode de fonctionnement, la matière pâteuse 10 sort de manière discontinue de la buse 14. Dans ce cas, des volumes discrets de matière pâteuse 10 sont déposés entre chaque déplacement de la buse 14.

Quel que soit le mode de fonctionnement, la matière pâteuse 10 est superposée de manière à former la pièce souhaitée.

Cette troisième technique est beaucoup moins onéreuse à mettre en place que les deux premières et utilise des techniques traditionnelles (séchage et cuisson) maîtrisées dans le domaine de la fabrication des pièces en céramique.

Cependant, elle nécessite de faire un compromis concernant la viscosité de la matière pâteuse 10. En effet, cette dernière doit être assez fluide pour lui permettre de s'écouler via la buse 14 mais assez pâteuse afin de permettre sa solidification pour pouvoir superposer les couches au fur et à mesure.

De plus, dans le cas d'une réalisation en continu, le volume de la pièce réalisée est limité au volume du réservoir 12.

Les documents US6030199, US2016/168453A1 et WO2018/229419 A1 proposent un procédé d'impression 3D utilisant une encre céramique qui contient un adjuvant permettant de modifier sans viscosité de telle sorte que l'encre soit liquide au moment du passage de la buse et pâteuse lorsque l'encre est déposée après l'élimination de l'adjuvant. Ce mode de réalisation rend difficile la mise en forme de l'encre. La présente invention vise à remédier aux inconvénients de l'art antérieur.

A cet effet, l'invention a pour objet un procédé de fabrication additive d'une pièce en matériau céramique comprenant une étape de dépose d'une matière de dépose sur une surface de dépose en l'éjectant à travers une buse, la buse et/ou la surface de dépose se déplaçant en fonction de la pièce à réaliser, caractérisé en ce que la matière de dépose est obtenue en mélangeant, au plus près de la buse, au moins un adjuvant et au moins une barbotine comportant 10% de particules colloïdales en suspension, concomitamment à l'éjection de la matière de dépose, les compositions de l'adjuvant et de la barbotine étant ajustées de manière à obtenir une matière pâteuse avant le passage de la buse ou niveau de la buse, comme défini dans la revendication 1.

Est décrit également, mais non revendiqué, un dispositif de fabrication additive d'une pièce en matériau céramique comprenant :
- une tête de dépose comportant une buse,
- un système de poussée configuré pour pousser une matière de dépose en direction de la buse,
- un système de déplacement configuré pour déplacer la tête de dépose et/ou une surface de dépose l'une par rapport à l'autre,
caractérisé en ce que la tête de dépose comprend au moins une zone de mélange qui communique avec la buse, avec au moins une alimentation en barbotine reliée à au moins un réservoir de barbotine et au moins une alimentation en adjuvant reliée à au moins un réservoir d'adjuvant.

Selon une autre caractéristique, le (ou les) réservoir(s) de barbotine est (sont) éloigné(s) de la tête de dépose, chaque réservoir de barbotine étant relié à la zone de mélange par au moins un premier conduit.

D'autres caractéristiques et avantages ressortiront de la description de l'invention qui va suivre, description donnée à titre d'exemple uniquement, en regard des dessins annexés parmi lesquels :
- La figure 1 est une représentation schématique d'un dispositif de fabrication additive par voie pâteuse qui illustre l'art antérieur,
- La figure 2 est une représentation schématique d'un dispositif, non revendiqué, de fabrication additive par voie liquide qui permet de réaliser le procédé selon l'invention, et
- La figure 3 est une représentation schématique d'un dispositif, non revendiqué, de fabrication additive par voie liquide qui permet un autre mode de réalisation du procédé selon l'invention.

Un dispositif de fabrication additive 22 est utilisé pour réaliser sur une surface de dépose 24 une pièce 26 en matériau céramique crue. Comme pour l'art antérieur, cette pièce crue est cuite pour finaliser sa fabrication.

Ce dispositif de fabrication additive 22 comprend une tête de dépose 28 qui présente une buse 30 via laquelle est éjectée une matière de dépose 32 sous forme pâteuse, qui a notamment une viscosité supérieure à 100 Pa.s.

Selon une configuration, la buse 30 est positionnée en partie inférieure de la tête de dépose 28 et présente une forme en entonnoir avec un orifice d'éjection 34 orienté vers la surface de dépose 24.

La tête de dépose 28 est supportée par un système de déplacement 36 configuré pour déplacer la tête de dépose 28, et plus particulièrement l'orifice d'éjection 34, par rapport à la surface de dépose 24.

Le système de déplacement 36 permet de déplacer la tête de dépose 28, par rapport à la surface de dépose 24, selon une première direction Z ou direction verticale (perpendiculaire à la surface de dépose 24) et selon au moins une deuxième direction perpendiculaire à la première direction. Selon une configuration, le système de déplacement 36 peut déplacer la tête de dépose 28 selon trois translations et l'orienter selon trois rotations. La tête de dépose 28 peut ainsi être inclinée par rapport à la première direction Z.

Selon un mode de dépose, la matière de dépose 32 est déposée par couches successives. Durant la réalisation d'une couche, la tête de dépose 28 se déplace dans un plan horizontal. Entre chaque couche, la tête de dépose 28 se déplace selon la première direction Z pour passer d'une couche à l'autre.

Le système de déplacement 36, la surface de dépose 24 et la buse 30 ne sont pas plus décrits car ils peuvent être identiques à ceux de la troisième technique de fabrication de l'art antérieur.

Selon un autre mode de réalisation, la tête de dépose 28 est fixe ou peut juste s'incliner par rapport à une direction et la surface de dépose 24 se déplace par rapport à la tête de dépose 24 selon au moins une translation et/ou selon au moins une rotation. En variante, la tête de dépose 28 et la surface de dépose 24 peuvent se déplacer.

Quel que soit le mode de réalisation, la tête de dépose 28 et/ou la surface de dépose 24 se déplacent en fonction de la pièce à réaliser.

La tête de dépose 28 comprend une zone d'éjection 38 qui contient la matière de dépose 32 et qui communique avec la buse 30, ainsi qu'un système de poussée 40 positionné au moins partiellement, dans la zone d'éjection 38 et configuré pour pousser la matière de dépose 32 en direction de la buse 30.

Selon un mode de réalisation visible sur la figure 2, le système de poussée 40 est une vis sans fin.

Selon un autre mode de réalisation visible sur la figure 3, le système de poussée 40 est écarté de la tête de dépose 28 et se présente par exemple sous la forme d'au moins une pompe P, pneumatique, hydraulique ou mécanique.

Le dispositif de fabrication additive comprend au moins une commande pour contrôler le système de poussée 40. Ainsi, selon les modes de fonctionnement, il est possible de faire fonctionner le système de poussée 40 pas à pas ou en continu.

Dans le cas d'un fonctionnement pas à pas, la matière de dépose 32 sort de la buse 30 sous forme de volumes discrets et la buse 30 est déplacée entre la sortie de deux volumes discrets de matière qui sont agencés de manière adéquate en fonction de la pièce à réaliser.

Dans le cas d'un fonctionnement en continu combiné à un déplacement de la buse 30, la matière de dépose 32 sort de la buse 30 sous la forme d'un boudin pâteux dont les tronçons sont agencés de manière adéquate en fonction de la pièce à réaliser.

Le pilotage de l'éjection de la matière de dépose 32 et du déplacement de la buse 30 n'est pas plus détaillé car il dépend de la pièce à réaliser.

Selon un mode de réalisation non limitatif, le dispositif de fabrication additive 22 comprend un système de chauffage, positionné sous la surface de dépose 24 dans le cas d'un plateau chauffant ou au-dessus de la surface de dépose 24 dans le cas d'une lampe pour chauffer la matière déposée et mieux maîtriser la consolidation de cette dernière.

Selon une caractéristique de l'invention, la matière de dépose 32 est obtenue en mélangeant, au plus près de la buse 30, au moins une barbotine 42 et au moins un adjuvant 44, concomitamment à l'éjection de la matière de dépose 32 à travers la buse 30.

Pour la présente demande, on entend par adjuvant une composition constituée d'au moins une résine organique et/ou d'au moins un floculant et/ou d'au moins un modificateur de pH.

Par barbotine, on entend une matière à l'état liquide et qui présente une viscosité inférieure à 100 Pa.s, de préférence inférieure à 10 Pa.s, et supérieure à 0,005 Pa.s, de préférence supérieure à 0,05 Pa.s.

Contrairement à une encre minérale, la barbotine comprend au moins 10 % de particules colloïdales en suspension.

Par au plus près, on entend que la matière de dépose 32 peut transiter de la zone de mélange vers la buse 30 avec des pertes de charge limitées.

La distance entre la zone de mélange et la buse 30 est fonction de la viscosité de la matière de dépose 32. Ainsi, la distance entre la zone de mélange et la buse 30 est inversement proportionnelle à la viscosité de la matière de dépose 32. Plus la viscosité de la matière de dépose 32 est élevée et plus la distance entre la zone de mélange et la buse doit être réduite. Selon l'invention, la zone de mélange et la buse 30 sont séparées d'une distance inférieure à 1 m, de préférence inférieure à 50 cm.

Par concomitamment, on entend que le mélange est réalisé juste avant l'éjection de la matière de dépose. La durée entre le mélange et l'éjection de la matière de dépose est faible et dépend de l'adjuvant et de la barbotine. Cette durée est inférieure à 1 minute et de préférence inférieure à 10 s.

Selon un mode de fonctionnement, le mélange est réalisé en continu et la matière est éjectée dans la continuité du mélange.

Selon une caractéristique de l'invention, chaque barbotine 42 est une suspension d'au moins un oxyde métallique et/ou d'au moins une matière première minérale. La barbotine comprend au moins 10%, de préférence au moins 30%, de particules colloïdales en suspension dans de l'eau.

Les pourcentages de particules colloïdales et d'adjuvant seront choisis en fonction de la consistance recherchée pour la matière déposée. Ainsi, une barbotine 42 comportant 30% de particules colloïdales avec un adjuvant 44 peu concentré permettra d'obtenir une matière déposée sous la forme d'un boudin plus mou qu'une barbotine 42 comportant 70 % de particules colloïdales avec un adjuvant très concentré.

Pour la présente demande, le terme barbotine désigne aussi bien une barbotine qu'un mélange de barbotines dont la composition peut évoluer au cours de la dépose.

La barbotine 42 étant liquide, son écoulement dans un conduit génère des pertes de charge nettement inférieures à celles engendrées par le déplacement d'une matière pâteuse comme dans le cas de l'art antérieur.

A titre d'exemple, la barbotine 42 peut comprendre, en suspension, une poudre minérale de type grès commercialisée par la société CERADEL sous la référence GC304. Bien entendu, l'invention n'est pas limitée à cette composition, cette dernière pouvant varier d'une pièce à l'autre ou évoluer en cours de réalisation de la pièce en fonction des caractéristiques recherchées.

A titre d'exemple, l'adjuvant 44 est une composition comprenant 100% de sulfate d'aluminium. Bien entendu, l'invention n'est pas limitée à cet adjuvant. La composition de l'adjuvant sera adaptée en fonction notamment de la composition de la barbotine.

Quelle que soit la nature de l'adjuvant 44, il se présente sous forme liquide ou d'un gel. Ainsi, comme pour la barbotine, son écoulement dans un conduit génère des pertes de charge nettement inférieures à celles engendrées par le déplacement d'une matière pâteuse.

Ainsi, selon l'invention, la barbotine 42 et l'adjuvant 44 sont stockés dans des réservoirs R42 et R44 statiques (non supportés par le système de déplacement 36) et distincts. De préférence, le (ou les) réservoir(s) de barbotine R42 est (sont) éloigné(s) de la tête de dépose 28. Selon un mode de réalisation, le (ou les) réservoir(s) de barbotine R42 et le (ou les) réservoir(s) d'adjuvant R44 sont éloignés de la tête de dépose 30.

Le dispositif de fabrication additive 22 peut comprendre un ou plusieurs réservoirs R42 de barbotine qui contiennent chacun une composition de barbotine différente d'un réservoir à l'autre. De la même manière, il peut comprendre plusieurs réservoirs R44 d'adjuvant qui contiennent chacun une composition d'adjuvant différente d'un réservoir à l'autre.

Selon un mode de réalisation, au moins un réservoir de barbotine R42 est ouvert, de manière à pouvoir être rempli sans que l'écoulement de matière pâteuse 32 en sortie de buse 30 ne soit interrompu.

Selon un mode de réalisation visible sur la figure 2, la tête de dépose 28 comprend au moins une zone de mélange 46 qui présente au moins une alimentation en barbotine 48 et au moins une alimentation en adjuvant 50 et qui communique avec la buse 30.

La tête de dépose 28 comprend un système de mélange 52 positionné au moins partiellement dans la zone de mélange 46 et configuré pour mélanger au moins une barbotine 42 et au moins un adjuvant 44 afin d'obtenir une matière de dépose 32 homogène. Le système de mélange 52 peut se présenter sous la forme de pales reliées à un rotor. Bien entendu, l'invention n'est pas limitée à ce type de mélangeur.

La durée et l'intensité du mélange seront adaptées en fonction de la barbotine et/ou de l'adjuvant.

Selon une configuration, les zones d'éjection 38 et de mélange 46 sont deux zones distinctes sous la forme de deux chambres distinctes qui communiquent via au moins un conduit ou au moins un orifice.

Selon une autre configuration visible sur la figure 2, les zones d'éjection 38 et de mélange 46 ne forment qu'une unique zone, sous la forme d'une chambre, qui comprend en partie supérieure le système de mélange 52 et en partie inférieure le système de poussée 40. De plus, un même système peut assurer les fonctions du système de poussée 40 et du système de mélange 52.

Le dispositif de fabrication additive comprend, pour chaque réservoir R42 de barbotine, au moins un premier conduit 54 pour acheminer la barbotine 42 du réservoir R42 jusqu'à la tête de dépose 28 et plus particulièrement jusqu'à la zone de mélange 46 et, pour chaque réservoir d'adjuvant R44, au moins un deuxième conduit 56 pour acheminer l'adjuvant 44 du réservoir R44 jusqu'à la tête de dépose 28 et plus particulièrement jusqu'à la zone de mélange 46.

Les écoulements de la barbotine et de l'adjuvant des réservoirs R42, R44 vers la zone de mélange 46 peuvent être obtenus par gravité. Dans ce cas, les réservoirs R42, R44 sont positionnés à une hauteur plus importante que la zone de mélange 46.

En variante, le dispositif de fabrication additive comprend au moins une pompe ou analogue pour provoquer l'écoulement des réservoirs de barbotine et/ou de l'adjuvant R42, R44 vers la zone de mélange 46.

Au moins une pompe doseuse est prévue pour doser la quantité de barbotine et/ou de l'adjuvant introduite dans la zone de mélange 46. Selon une configuration, chaque premier conduit comprend une première pompe doseuse 58 pour contrôler la quantité de barbotine introduite dans la zone de mélange 46 et chaque deuxième conduit 56 comprend une deuxième pompe doseuse 60 pour contrôler la quantité de l'adjuvant introduite dans la zone de mélange 46.

Selon une autre particularité de l'invention, la barbotine 42 est désaérée avant d'être mélangée à l'adjuvant 44. Selon un mode de réalisation, chaque réservoir de barbotine R42 comprend un système de désaérage permettant de retirer les bulles d'air de la barbotine 42. Selon un autre mode de réalisation illustré par la figure 3, la tête de dépose 28 comprend une buse 30 et une chambre qui communique avec la buse 30 et qui présente une alimentation en barbotine 48. Selon une configuration, le dispositif de fabrication additive comprend au moins un réservoir de barbotine R42 relié à l'alimentation en barbotine 48 par un premier conduit 54.

Selon ce deuxième mode de réalisation, le système de poussée 40 est disposé à l'extérieur de la tête de dépose 28 et se présente sous la forme d'une pompe P positionnée sur le premier conduit 54.

La tête de dépose 28 comprend une alimentation en adjuvant 50 positionnée au niveau de la buse 30 et reliée à au moins un réservoir d'adjuvant R44 par un deuxième conduit 56. L'alimentation en adjuvant 50 et/ou la zone de mélange 46 où débouche l'alimentation en adjuvant 50 sont configurées pour provoquer le mélange entre la barbotine et l'adjuvant.

Les compositions de l'adjuvant et de la barbotine sont ajustées de manière à obtenir une matière pâteuse avant le passage de la buse 30, au niveau de la buse 30 ou après le passage de la buse 30. Ainsi, le mélange de la barbotine et de l'adjuvant peut être liquide ou quasi liquide au passage de la buse 30 et devenir pâteux et conserver sa forme de boudin juste après le passage de la buse 30.

Quel soit le mode de réalisation, la tête de dépose 28 comprend au moins une zone de mélange, proche de la buse 30, au niveau de laquelle sont mélangés au moins une barbotine et au moins un adjuvant, qui communique avec au moins une alimentation en barbotine et au moins une alimentation en adjuvant.

Le fait d'alimenter la tête de dépose en céramique par voie liquide procure les avantages suivants :
Le réservoir contenant la matière à déposer peut être séparé de la tête de dépose ce qui contribue à réduire les dimensions et la masse de la tête de dépose et in fine à réduire les contraintes appliquées au système de déplacement.

Contrairement à l'art antérieur, le désaérage de la matière déposée est simplifié, les bulles d'air étant bien plus mobiles et faciles à retirer dans une composition liquide que dans une composition pâteuse.

L'utilisation d'un réservoir ouvert pour stocker la barbotine permet de pouvoir le remplir, si nécessaire, sans avoir besoin d'interrompre l'écoulement de matière au niveau de la buse. Ainsi, il est possible d'obtenir des pièces de grandes dimensions sans stopper l'écoulement de matière.

Le fait d'utiliser une barbotine liquide permet de déposer la matière avec une viscosité plus faible ce qui permet de mieux contrôler l'étalement du boudin formé et d'améliorer le niveau de détail sur la pièce réalisée.

Enfin, l'utilisation d'une barbotine liquide permet de faire évoluer plus facilement la composition de la matière déposée. Ainsi, à partir d'une unique buse, il est possible de réaliser une pièce ayant des compositions différentes et/ou des gradients de compositions.

## Revendications

1. Procédé de fabrication additive d'une pièce en matériau céramique comprenant une étape de dépose d'une matière de dépose (32) sur une surface de dépose (24) en l'éjectant à travers une buse (30), la surface de dépose (24) et/ou la buse (30) se déplaçant en fonction de la pièce à réaliser, **caractérisé en ce que** la matière de dépose (32) est obtenue en mélangeant, à une distance inférieure à 1 m de la buse (30), au moins un adjuvant (44) et au moins une barbotine (42) comportant au moins 10 % de particules colloïdales en suspension, la durée entre le mélange et l'éjection de la matière de dépose (32) étant inférieure à 1 minute, les compositions de l'adjuvant (44) et de la barbotine (42) étant ajustées de manière à obtenir une matière pâteuse avant le passage de la buse (30) ou au niveau de la buse (30).

2. Procédé de fabrication additive d'une pièce en matériau céramique selon la revendication 1, **caractérisé en ce que** l'adjuvant est une composition constituée d'au moins une résine organique et/ou d'au moins un floculant et/ou d'au moins un modificateur de pH.

3. Procédé de fabrication additive d'une pièce en matériau céramique selon la revendication 1 ou 2, **caractérisé en ce que** chaque barbotine (42) est une suspension d'au moins un oxyde métallique et/ou d'au moins une matière première minérale.

4. Procédé de fabrication additive d'une pièce en matériau céramique selon l'une des revendications précédentes, **caractérisé en ce que** la barbotine (42) est une suspension dans de l'eau.

5. Procédé de fabrication additive d'une pièce en matériau céramique selon l'une des revendications précédentes, **caractérisé en ce que** la barbotine (42) est désaérée avant d'être mélangée à l'adjuvant.

## Patentansprüche

1. Herstellungsverfahren zur additiven Fertigung eines Werkstücks aus keramischem Material, das einen Schritt zum Aufbringen eines Auftragsmaterials (32) auf eine Auftragsfläche (24) aufweist, durch Ausstoßen desselben durch eine Düse (30), wobei sich die Auftragsfläche (24) und/oder die Düse (30) entsprechend dem herzustellenden Werkstück bewegt, **dadurch gekennzeichnet, dass** das Auftragsmaterial (32) durch Mischen in einem Abstand von weniger als 1 m von der Düse (30) erhalten wird, wobei wenigstens ein Zusatzmittel (44) und wenigstens eine Schlämme (42) wenigstens 10% kolloidalen Partikel in Suspension aufweisen, wobei die Zeitspanne zwischen dem Mischen und dem Ausstoßen des Auftragsmaterials (32) weniger als 1 Minute beträgt, wobei die Zusammensetzungen des Zusatzmittels (44) und der Schlämme (42) so abgestimmt sind, dass vor dem Durchgang durch die Düse (30) oder im Bereich der Düse (30) eine pastöse Masse entsteht.

2. Herstellungsverfahren zur additiven Fertigung eines Werkstücks aus keramischem Material gemäß Anspruch 1, **dadurch gekennzeichnet, dass** das Zusatzmittel eine Zusammensetzung ist, die aus wenigstens einem organischen Harz und/oder wenigstens einem Flockungsmittel und/oder wenigstens einem pH-Modifikator besteht.

3. Herstellungsverfahren zur additiven Fertigung eines Werkstücks aus keramischem Material gemäß Anspruch 1 oder 2, **dadurch gekennzeichnet, dass** jede Schlämme (42) eine Suspension aus wenigstens einem Metalloxid und/oder wenigstens einem mineralischen Rohstoff ist.

4. Herstellungsverfahren zur additiven Herstellung eines Werkstücks aus keramischem Material gemäß einem der vorstehenden Ansprüche, **dadurch gekennzeichnet, dass** die Schlämme (42) eine Suspension in Wasser ist.

5. Herstellungsverfahren zur additiven Fertigung eines Werkstücks aus keramischem Material gemäß einem der vorstehenden Ansprüche, **dadurch gekennzeichnet, dass** die Schlämme (42) vor dem Vermischen mit dem Zusatzmittel entlüftet wird.

## Claims

1. Method for the additive manufacture of a part made from ceramic material, comprising a step of depositing a deposition material (32) on a deposition surface (24) by ejecting it through a nozzle (30), the deposition surface (24) and/or the nozzle (30) moving in accordance with the part to be produced, **characterized in that** the deposition material (32) is obtained by mixing, at a distance of less than 1 m from the nozzle (30), at least one adjuvant (44) and at least one slip (42) comprising at least 10% suspended colloidal particles, the time between the mixing and the ejection of the deposition material (32) being less than 1 minute, the compositions of the adjuvant (44) and of the slip (42) being adjusted so as to obtain a pasty material before passing through the nozzle (30) or at the nozzle (30).

2. Method for the additive manufacture of a part made from ceramic material according to Claim 1, **characterized in that** the adjuvant is a composition consisting of at least one organic resin and/or at least one flocculant and/or at least one pH modifier.

3. Method for the additive manufacture of a part made from ceramic material according to Claim 1 or 2, **characterized in that** each slip (42) is a suspension of at least one metal oxide and/or at least one inorganic raw material.

4. Method for the additive manufacture of a part made from ceramic material according to one of the preceding claims, **characterized in that** the slip (42) is a suspension in water.

5. Method for the additive manufacture of a part made from ceramic material according to one of the preceding claims, **characterized in that** the slip (42) is deaerated prior to being mixed with the adjuvant.
